# EUROPÄISCHE PATENTSCHRIFT

(11) **EP 3 303 859 B1**
(45) Veröffentlichungstag und Bekanntmachung des Hinweises auf die Patenterteilung: **19.02.2020**
(21) Anmeldenummer: 16721400.6
(22) Anmeldetag: 02.05.2016
(51) Int. Cl.: F16B 37/04

(54) **BEFESTIGUNGSELEMENT**
FASTENING ELEMENT
ÉLÉMENT DE FIXATION

(30) Priorität: 27.05.2015 DE 102015108302
(43) Veröffentlichungstag der Anmeldung: 11.04.2018
(73) Patentinhaber: fischerwerke GmbH & Co. KG, 72178 Waldachtal (DE)
(72) Erfinder: LINKA, Martin, 72160 Horb a.N. (DE); FÖRMER, Thomas, 72160 Horb-Bildechingen (DE)
(86) Internationale Anmeldenummer: PCT/EP2016/059730
(87) Internationale Veröffentlichungsnummer: WO 2016/188708

(56) Entgegenhaltungen:
- EP-A1- 2 275 694
- EP-A1- 2 821 656
- WO-A1-2007/008060
- US-A- 4 146 074

## Beschreibung

Die Erfindung betrifft ein Befestigungselement mit den Merkmalen des Oberbegriffs des Anspruchs 1.

Aus der europäischen Patentanmeldung EP 2 275 694 A1 ist ein Befestigungselement bekannt, mit dem ein Gegenstand an einer Montageschiene befestigt werden kann. Montageschienen werden üblicherweise zur Installation von Leitungen in Gebäuden verwendet, beispielsweise zum Verlegen abgehängter Rohre von Versorgungsleitungen mittels Rohrschellen. Typische Montageschienen weisen einen rechteckförmigen Querschnitt auf, mit einer in Schienenlängsrichtung verlaufenden schlitzartigen Längsöffnung, die durch Öffnungsränder begrenzt wird. Das Befestigungselement weist eine Befestigungsmutter auf, die in die Längsöffnung eingeführt wird und durch eine Drehung um 90° um eine Längsachse des Befestigungselements so positioniert werden kann, dass sie die Öffnungsränder hintergreift, wodurch die Befestigungsmutter an der Montageschiene befestigt wird. Dabei liegt die Befestigungsmutter mit einer Anlagefläche auf einer Außenseite der Montageschiene auf. Die Befestigungsmutter ist in einer Aufnahmeöffnung eines hülsenartigen Distanzelements gehalten, an dem die Anlagefläche ausgebildet ist. Die Befestigungsmutter weist eine Gewindebohrung auf, in die eine Schraube oder eine Gewindestange eingeschraubt und der Gegenstand befestigt werden kann. Um die Befestigungsmutter gegen die Öffnungsränder verspannen zu können, ist die Befestigungsmutter in der Aufnahmeöffnung auf bügelartigen Federschenkeln gelagert, die zwei Seitenteile der Aufnahmeöffnung miteinander verbinden. Nachteilig an diesem Befestigungselement ist ein im Verhältnis zur notwendigen axialen Bauhöhe relativ geringer Federweg der Befestigungsmutter. Aus der US Patentschrift 4,460,299 ist ein gattungsgemäßes Befestigungselement bekannt, das statt zwei bügelförmigen Federschenkeln zwei Federschenkel aufweist, die kragarmförmig die Befestigungsmutter umfassen und von unten gegen die Befestigungsmutter drücken. Allerdings greifen die Federschenkel in die Befestigungsmutter ein, was den möglichen Federweg beschränkt.

Ein weiteres gattungsgemäßes Befestigungselement ist aus der EP 2 821 656 A1 bekannt.

Aufgabe der Erfindung ist, ein alternatives Befestigungselement vorzugschlagen, das bei geringer Bauhöhe einen großen Federweg ermöglicht.

Diese Aufgabe wird erfindungsgemäß durch ein Befestigungselement mit den Merkmalen des Anspruchs 1 gelöst. Das erfindungsgemäße Befestigungselement weist eine Befestigungsmutter und eine Montagehülse zur Befestigung eines Gegenstandes an einer Montageschiene auf. Bei dem Gegenstand kann es sich beispielsweise um eine Rohrschelle oder ein Winkel- oder Verbindungsstück handeln, mit dem zwei Montageschienen miteinander verbunden werden können. Die Befestigungsmutter ist insbesondere aus Metall hergestellt und weist eine Länge auf, die größer als ihre Breite und ihre Höhe ist. Die Befestigungsmutter ist gestaltet, um in eine korrespondierende Öffnung der Montageschiene eingeführt und durch eine Drehung um eine Längsachse des Befestigungselements in der Montageschiene befestigt zu werden, indem sie Ränder der Öffnung hintergreift. Die Befestigungsmutter weist insbesondere eine Gewindebohrung auf, in die eine Schraube oder eine Gewindestange eingeschraubt werden und der Gegenstand an der Montageschiene befestigt werden kann. Die Längsachse des Befestigungselements verläuft insbesondere parallel zur Einsteckrichtung des Befestigungselements in die Öffnung und insbesondere normal zur Schienenlängsachse. Die Montagehülse umfasst eine bundartige Anlagefläche zur Anlage an der Montageschiene, eine Mutteraufnahme zur Aufnahme der Befestigungsmutter und ein Distanzelement mit einer sich entlang einer Längsachse erstreckenden Schraubenaufnahme. Das Distanzelement ist insbesondere aus Kunststoff hergestellt und weist insbesondere die Form eines Hohlzylinders auf. Die Schraubenaufnahme dient zur Aufnahme einer Schraube oder einer Gewindestange zum Befestigen des Gegenstands an der Montageschiene, wobei die Schraubenaufnahme insbesondere das Distanzelement durchdringt, so dass eine Schraube durch die Schraubenaufnahme hindurch in eine Gewindebohrung der Befestigungsmutter eingeschraubt werden kann. Die bundartige Anlagefläche steht bezogen auf die Längsachse in radialer Richtung über das Distanzelement über, wobei "bundartig" nicht notwendigerweise bedeutet, dass die Anlagefläche zu allen Richtungen über das Distanzelement übersteht und/oder als Kreisring ausgebildet ist. Die Mutteraufnahme ist an dem der Anlagefläche gegenüberliegenden Ende des Distanzelements angeordnet und weist eine Aufnahmeöffnung auf, die an ihren Seiten durch zwei sich gegenüberliegende Seitenteile begrenzt ist. Die Seitenteile sind insbesondere säulenartig ausgebildet und erstrecken sich insbesondere parallel zur Längsachse vom Distanzelement weg. Zwischen den Seitenteilen ist die Befestigungsmutter bezüglich der Längsachse mit dem Distanzelement drehfest, aber axial beweglich gehalten. Das heißt, dass die Befestigungsmutter in der Mutteraufnahme relativ zum Distanzelement axial bewegt werden kann, aber nur gemeinsam mit dem Distanzelement um die Längsachse drehbar ist. Um das Befestigungselement gegen die Ränder einer Öffnung einer Montageschiene verspannen zu können, ist an einem ersten Seitenteil der Mutteraufnahme ein Federschenkel angeordnet, der die Befestigungsmutter in Richtung zum Distanzelement hin federelastisch beaufschlagt, derart, dass sie gegen die Federkraft des Federschenkels axial vom Distanzelement weg bewegt werden kann.

Kennzeichnend für das erfindungsgemäße Befestigungselement ist, dass an dem zweiten Seitenteil kein Federschenkel angeordnet ist, der die Befestigungsmutter in Richtung zum Distanzelement hin federelastisch beaufschlägt. Das bedeutet insbesondere, dass von der Seite der Mutteraufnahme, auf der das zweite Seitenteil angeordnet ist, kein Federschenkel in die Aufnahmeöffnung ragt. Der an dem ersten Seitenteil angeordnete Federschenkel ist nur mit dem ersten Seitenteil verbunden und ragt kragarmförmig in die Aufnahmeöffnung. Sind mehrere Federschenkel an der Mutteraufnahme ausgebildet, so ragen diese von der gleichen Seite der Mutteraufnahme in die Aufnahmeöffnung, wobei die Federschenkel nicht alle mit dem zweiten Seitenteil verbunden sein müssen. Es können weitere Seitenteile auf der Seite der Mutteraufnahme angeordnet sein, auf der das erste Seitenteil angeordnet ist, mit denen die Federschenkel verbunden sind. Das bedeutet, dass der oder die Federschenkel mit ihrem freien Ende in die Aufnahmeöffnung ragen und mit ihrem anderen Ende mit dem ersten Seitenteil oder einem weiteren Seitenteil verbunden sind, das sich auf der Seite der Mutteraufnahme befindet, auf der das erste Seitenteil angeordnet ist. Für jeden Federschenkel kann ein gesondertes Seitenteil ausgebildet sein. Sind mehrere Federschenkel ausgebildet, so können diese parallel zueinander verlaufen. Die Federschenkel können auch alle am ersten Seitenteil angeordnet sein. Das zweite Seitenteil wirkt als Führung für die Befestigungsmutter bei axialer Bewegung. Da an dem zweiten Seitenteil kein Federschenkel angeordnet ist, beeinflusst eine axiale Bewegung der Befestigungsmutter das als Führung wirkende Seitenteil nicht, während das erste Seitenteil, an dem der Federschenkel angeordnet ist, bei einer axialen Bewegung der Befestigungsmutter verformt werden kann, was insbesondere bei einer relativ großen Axialbewegung der Fall ist. Somit ist auch bei einer relativ großen axialen Bewegung die Befestigungsmutter durch das zweite Seitenteil bei der axialen Bewegung geführt und bei einer Drehbewegung gehalten. Trotzdem ist die erforderliche Bauhöhe des erfindungsgemäßen Befestigungselements gering.

Die Befestigungsmutter ist in der Aufnahmeöffnung vorzugsweise mittels des Federschenkels gehalten. Das heißt, dass die Befestigungsmutter und die Montagehülse schon allein durch die Klemmung miteinander verliersicher verbunden sind, was eine einfache Montage des Befestigungselements erlaubt.

Bei einer bevorzugten Ausgestaltungsform des erfindungsgemäßen Befestigungselements sind das erste Seitenteil und der Federschenkel biegesteif miteinander verbunden. Insbesondere bilden das erste Seitenteil und der Federschenkel eine beigesteife Rahmenecke aus. Bei einer axialen Bewegung des Federschenkels mit der Befestigungsmutter in axialer Richtung weg vom Distanzelement wird das erste Seitenteil aufgrund der biegesteifen Verbindung radial nach außen bewegt, der Federschenkel und das erste Seitenteil werden gemeinsam elastisch verformt. Durch die gemeinsame elastische Verformung ist eine axiale Bewegung der Befestigungsmutter weg vom Distanzelement möglich, die größer ist, als wenn ausschließlich der Federschenkel verformt werden würde. Trotzdem ist die Befestigungsmutter mittels des zweiten Seitenteils, das sich aufgrund des fehlenden Federschenkels nicht verformt, bei der Bewegung sicher geführt.

Vorzugsweise bildet das erste Seitenteil eine erste Anlagefläche für eine erste Seitenwand der Befestigungsmutter und/oder das zweite Seitenteil eine zweite Anlagefläche für eine zweite Seitenwand der Befestigungsmutter. Insbesondere sind die Anlagefläche bzw. die Anlageflächen und die Seitenwand bzw. die Seitenwände als korrespondierende, insbesondere ebene Fläche bzw. Flächen ausgebildet, womit eine gute Anlage der Befestigungsmutter an dem ersten und/oder dem zweiten Seitenteil gewährleistet ist.

Bei einer weiteren bevorzugten Ausgestaltungsform des erfindungsgemäßen Befestigungselements steht, insbesondere in einem nicht-gespannten Zustand, in dem die Befestigungsmutter insbesondere am Distanzelement anliegt, das zweite Seitenteil über die Vorderfläche der Befestigungsmutter über, die dem Distanzelement abgewandt ist. Das zweite Seitenteil weist somit eine Länge auf, die auch bei einer großen axialen Bewegung der Befestigungsmutter eine gute Führung ermöglicht.

Weiterhin ist bevorzugt, dass an dem ersten Seitenteil zwei Federschenkel angeordnet sind, die die Befestigungsmutter in Richtung zum Distanzelement hin federelastisch beaufschlagen. Die Ausbildung von zwei Federschenkeln am ersten Seitenteil begünstigt eine gleichmäßige Beaufschlagung der Befestigungsmutter durch die Federschenkel, was eine gleichmäßige Bewegung der Befestigungsmutter in der Mutteraufnahme ermöglicht.

Bei einer bevorzugten Ausgestaltungsform des erfindungsgemäßen Befestigungselements weist das erste Seitenteil und/oder das zweite Seitenteil zumindest in Teilbereichen einen kreissegmentförmigen Querschnitt mit einer gekrümmten Umfangsfläche auf. Insbesondere weist die Mutteraufnahme im Bereich der Seitenteile einen Durchmesser auf, der im Wesentlichen dem Durchmesser eines in die Öffnung der Montageschiene, in die das Befestigungselement eingebracht wird, eingeschriebenen Inkreis entspricht. Insbesondere entspricht der Durchmesser der Mutteraufnahme im Bereich der Seitenteile dem Durchmesser des Distanzelements, das insbesondere eine zumindest in Teilbereichen zylindrische Mantelfläche aufweist, so dass die Seitenwände und/oder das Distanzelement das Befestigungselement bei einer Drehung um die Längsachse führen, wenn das Befestigungselement in eine Öffnung der Montageschiene eingesetzt ist.

Um bei einem in eine Öffnung einer Montageschiene eingesetzten Befestigungselement bei einer Drehung um die Längsachse ein zu weites Drehen des Befestigungselements zu verhindern, weist das Befestigungselement mindestens zwei Anschlagelemente auf, die insbesondere an der Distanzhülse angeordnet sind und vorzugsweise über die Mantelfläche der Distanzhülse radial überstehen. Die Anschlagelemente sind am Distanzelement spiegelsymmetrisch zur Längsachse angeordnet und verhindern durch eine Anlage an den Rändern der Öffnung ein Überdrehen.

Vorzugsweise kann zur besseren Führung am zweiten Seitenteil ein Führungselement angeordnet sein, das an der Befestigungsmutter anliegt. Insbesondere ist das Führungselement als Führungssteg ausgebildet. Insbesondere erstreckt sich das Führungselement über die gesamte Höhe des zweiten Seitenteils.

Die Erfindung wird nachfolgend anhand eines in der Zeichnung dargestellten Ausführungsbeispiels näher erläutert.

Es zeigen:
- Figur 1: ein erfindungsgemäßes Befestigungselement in einer perspektivischen Darstellung;
- Figur 2: das erfindungsgemäße Befestigungselement in einer Explosionsdarstellung;
- Figur 3: das erfindungsgemäße Befestigungselement in einer Ansicht; und
- Figur 4: einen Teil einer Montagehülse des erfindungsgemäßen Befestigungselements in einer perspektivischen Darstellung.

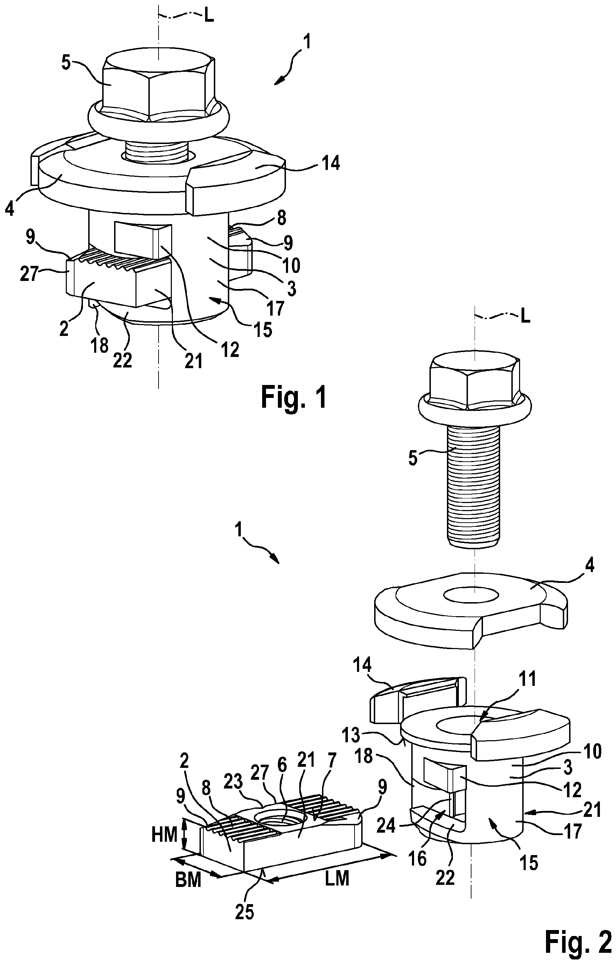

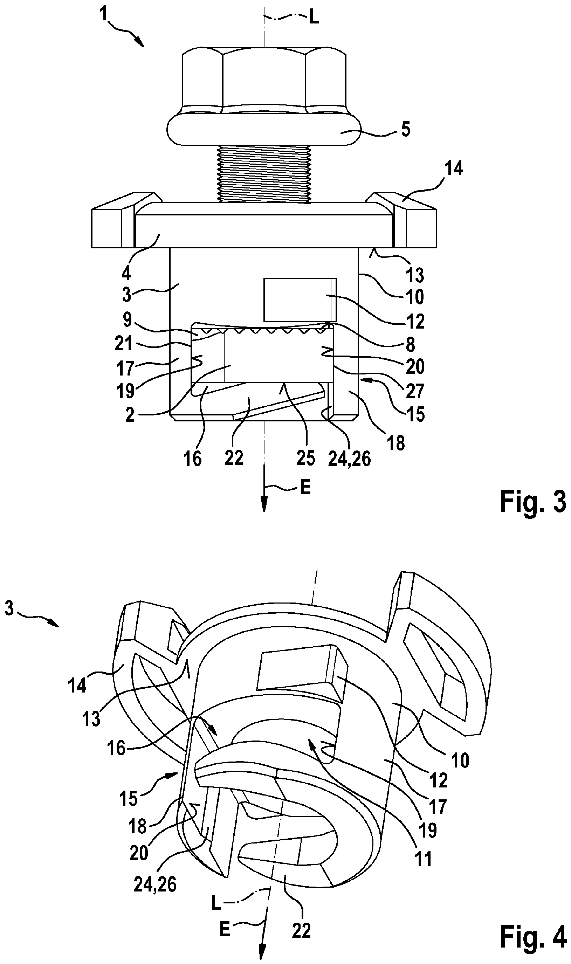

Das in den Figuren 1 bis 3 dargestellte Befestigungselement 1 erstreckt sich entlang einer Längsachse L und besteht aus einer Befestigungsmutter 2, einer Montagehülse 3, einer Verspannplatte 4 und einer Schraube 5.

Wie insbesondere in Figur 2 zu sehen, ist die Befestigungsmutter 2 als langgestreckter Quader ausgestaltet, mit einer Länge LM, die größer als ihre Breite BM und ihre Höhe HM ist. Mittig in der Befestigungsmutter 2 ist eine Gewindebohrung 6 angeordnet, die die Befestigungsmutter 2 in Richtung ihrer Höhe HM bzw. der Längsachse L durchdringt und in die die Schraube 5 eingeschraubt ist. Auf einer in Einbringrichtung E hinteren Rückfläche 7 der Befestigungsmutter 2 ist eine Profilierung 8 angeordnet, zum Eingriff in eine korrespondierende Riffelung, die typischerweise an den eine Öffnung einer nicht dargestellten Montageschiene begrenzenden Rändern ausgebildet ist. Die Einbringrichtung E ist die Richtung, in der das Befestigungselement 1 in eine Öffnung einer Montageschiene planmäßig eingebracht wird. Sie verläuft im Wesentlichen parallel zur oder liegt auf der Längsachse L. Zwei sich bezüglich der Längsachse L gegenüberliegende Ecken 9 der Rückfläche 7 der Befestigungsmutter 2 sind keilförmig abgeschrägt. Die Befestigungsmutter 2 weist zwei Seitenwände 21, 27 auf. An der zweiten Seitenwand 27 ist mittig eine in Richtung der Höhe HM verlaufende dreiecksförmige Führungsnut 23 angeordnet.

Die Montagehülse 3 besteht aus einem Distanzelement 10, das hohlzylindrisch ausgebildet ist und eine sich entlang der Längsachse L erstreckende Schraubenaufnahme 11 aufweist, durch die der Schaft der Schraube 5 zum Einschrauben in die Gewindebohrung 6 der Befestigungsmutter 2 durchgeführt ist. Das Distanzelement 10 weist eine zylindrische Mantelfläche auf, an der zwei radial über die Mantelfläche überstehende Anschlagelemente 12 angeordnet sind. Die Anschlagelemente 12 sind keilförmig ausgebildet und zur Längsachse L spiegelsymmetrisch am Distanzelement 10 angeordnet. An seinem in Einbringrichtung E hinteren Ende ist am Distanzelement 10 eine bundartige Anlagefläche 13 ausgebildet, die radial über das Distanzelement 10 übersteht und zwei Laschen 14 umfasst, mit denen die Verspannplatte 4 klemmend an der Montagehülse 3 gehalten ist. An dem der Anlagefläche 13 gegenüberliegenden Ende des Distanzelements 10 ist eine Mutteraufnahme 15 angeordnet, die eine schlitzartige Aufnahmeöffnung 16 aufweist, die durch zwei sich gegenüberliegende Seitenteile 17, 18 begrenzt ist. Zwischen den Seitenteilen 17, 18 ist die Befestigungsmutter 2 bezüglich der Längsachse L drehfest, aber axial beweglich gehalten. Die Seitenteile 17, 18 bilden mit ihren der Befestigungsmutter 2 zugewandten Flächen ebenen Anlageflächen 19, 20 für die Seitenwände 21, 27 der Befestigungsmutter 2. An der zweiten Anlagefläche 20 des zweiten Seitenteils 18 ist ein Führungssteg 24 als Führungselement 26 angeordnet, der einen dreiecksförmigen Querschnitt aufweist, der mit der Führungsnut 23 der Befestigungsmutter 2 korrespondiert, und der sich im Wesentlichen über die axiale Ausdehnung des zweiten Seitenteils 18 erstreckt. Die Seitenteile 17, 18 stehen in Einbringrichtung E über die Vorderfläche 25 der Befestigungsmutter 2 über. Die Außenflächen der Seitenteile 17, 18 sind an die Mantelfläche des zylindrischen Distanzelements 10 angepasst, so dass die Seitenteile 17, 18 einen im Wesentlichen kreissegmentförmigen Querschnitt mit einer gekrümmten Umfangsfläche aufweisen.

An dem ersten Seitenteil 17 der Mutteraufnahme 15 sind zwei Federschenkel 22 angeordnet, die die Befestigungsmutter 2 in Richtung zum Distanzelement 10 hin, also entgegen der Einbringrichtung E, federelastisch beaufschlagen. Die beiden Federschenkel 22 verlaufen parallel zueinander und ragen beide von der Seite der Mutteraufnehme 15, an der das erste Seitenteil 17 angeordnet ist, in die Aufnahmeöffnung, 16 und liegen an der Vorderfläche 25 der Befestigungsmutter 2 an. Die beiden Federschenkel 22 stützen die Befestigungsmutter 2 gegen eine Bewegung in Einbringrichtung E, wodurch die Befestigungsmutter 2 in der Aufnahmeöffnung 16 klemmend gehalten ist. Die Führungsnut 23 der Befestigungsmutter 2 greift in den Führungssteg 24 ein und verhindert somit eine Verschiebung der Befestigungsmutter 2 in der Aufnahmeöffnung 16 quer zur Längsachse L. Die Federschenkel 22 sind mit dem ersten Seitenteil 17 biegesteif verbunden und bilden mit dem ersten Seitenteil 17 eine biegesteife Rahmenecke, so dass bei einer Bewegung der Federschenkel 22 in Einbringrichtung E das in Einbringrichtung E vordere Ende des ersten Seitenteils 17 radial nach außen gebogen wird. Da sich das erste Seitenteil 17 bei einer Bewegung der Befestigungsmutter 2 in Einbringrichtung E mit dem Federschenkel 22 gemeinsam verformt, kann auch mit einer geringen Bauhöhe des Befestigungselements 1 ein großer Federweg erreicht werden. Auf der dem ersten Seitenteil 17 gegenüberliegenden Seite der Mutteraufnahme 15 befindet sich das zweite Seitenteil 18 mit dem Führungssteg 24. An diesem zweiten Seitenteil 18 ist kein Federschenkel angeordnet. Somit ragt von der Seite der Mutteraufnahme 15, auf der das zweite Seitenteil 18 angeordnet ist, kein Federschenkel in die Aufnahmeöffnung 16, der die Befestigungsmutter 2 entgegen der Einbringrichtung E federelastisch beaufschlagt. Die Befestigungsmutter 2 wird ausschließlich durch die mit dem ersten Seitenteil 17 verbundenen Federschenkel 22 entgegen der Einbringrichtung E federelastisch beaufschlagt. Somit bildet das zweite Seitenteil 18 eine stabile Führung für die Befestigungsmutter 2 bei einer axialen Bewegung entlang der Längsachse L. Bei einer Bewegung der Befestigungsmutter 2 in Einbringrichtung E wird das zweite Seitenteil 18 nicht nach außen gebogen, sondern ändert seine Position nicht. Somit ist die Befestigungsmutter 2 auch dann in der Mutteraufnahme 15 durch das Führungselement 26 sicher gehalten, wenn das erste Seitenteil 17, aufgrund einer großen Bewegung der Befestigungsmutter 2, in der Aufnahmeöffnung 16 in Einbringrichtung E radial nach außen gebogen ist und nicht mehr vollständig an der Befestigungsmutter 2 zugewandten ersten Seitenwand 21 der Befestigungsmutter 2 anliegt.

Das Befestigungselement 1 dient zum Befestigen eines Gegenstandes (nicht dargestellt), beispielsweise eines Winkelstücks, an einer Montageschiene (nicht dargestellt). Zum Befestigen wird das Befestigungselement 1 in eine Öffnung in einer Montageschiene eingesetzt, bis die Anlagefläche 13 an der Montageschiene anliegt. Dann wird das Befestigungselement 1 um 90° in Uhrzeigerrichtung um die Längsachse L gedreht, wodurch die Ecken 9 der Befestigungsmutter 2 gegen Ränder der Öffnung der Montagschiene gedrückt und an diesen entlang bewegt werden. Hierdurch wird die Befestigungsmutter 2 in Einbringrichtung E und entgegen der Federkraft der Federschenkel 22 bewegt, so dass die Federschenkel 22 die Befestigungsmutter 2 mit der Anlagefläche 13 gegen die Montageschiene verspannen. Dabei hält das zweite Seitenteil 18 die Befestigungsmutter 2 mit dem Führungselement 26 in Position und führt sie bei ihrer axialen Bewegung. Befindet sich das Befestigungselement 1 in der gewünschten Lage in der Montageschiene, so wird die Befestigungsmutter 2 mit der Schraube 5 gegen die Anlagefläche 13 und insbesondere gegen die Verspannplatte 4 verspannt, so dass ein Gegenstand an der Montageschiene befestigt ist.

### Bezuqszeichenliste

### Befestigungselement

- 1: Befestigungselement
- 2: Befestigungsmutter
- 3: Montagehülse
- 4: Verspannplatte
- 5: Schraube
- 6: Gewindebohrung
- 7: Rückfläche
- 8: Profilierung
- 9: Ecke
- 10: Distanzelement
- 11: Schraubenaufnahme
- 12: Anschlagelement
- 13: Anlagefläche
- 14: Lasche
- 15: Mutteraufnahme
- 16: Aufnahmeöffnung
- 17: erstes Seitenteil
- 18: zweites Seitenteil
- 19: erste Anlagefläche
- 20: zweite Anlagefläche
- 21: erste Seitenwand
- 22: Federschenkel
- 23: Führungsnut
- 24: Führungssteg
- 25: Vorderfläche
- 26: Führungselement
- 27: zweite Seitenwand
- BM: Breite der Befestigungsmutter 2
- E: Einbringrichtung
- HM: Höhe der Befestigungsmutter 2
- L: Längsachse
- LM: Länge der Befestigungsmutter 2

## Patentansprüche

1. Befestigungselement (1) mit einer Befestigungsmutter (2) und einer Montagehülse (3) zur Befestigung eines Gegenstandes an einer Montageschiene,
wobei die Befestigungsmutter (2) eine Länge (LM) aufweist, die größer als ihre Breite (BM) und ihre Höhe (HM) ist,
wobei die Montagehülse (3) eine bundartige Anlagefläche (13) zur Anlage an der Montageschiene, eine Mutteraufnahme (15) zur Aufnahme der Befestigungsmutter (2) und ein Distanzelement (10) mit einer sich entlang einer Längsachse (L) erstreckenden Schraubenaufnahme (11) umfasst,
wobei die Mutteraufnahme (15) an dem der Anlagefläche (13) gegenüberliegenden Ende des Distanzelements (10) angeordnet ist,
wobei die Mutteraufnahme (15) eine Aufnahmeöffnung (16) aufweist, die durch zwei sich gegenüberliegende Seitenteile (17, 18) begrenzt ist, zwischen denen die Befestigungsmutter (2) bezüglich der Längsachse (L) mit dem Distanzelement (10) drehfest, aber axial beweglich gehalten ist, und
wobei das Befestigungselement (1) einen Federschenkel (22) aufweist, der an einem ersten Seitenteil (17) der Mutteraufnahme (15) angeordnet ist und der die Befestigungsmutter (2) in Richtung zum Distanzelement (10) hin federelastisch beaufschlagt,
**dadurch gekennzeichnet,**
**dass** an dem zweiten Seitenteil (18) kein Federschenkel angeordnet ist, der die Befestigungsmutter (2) in Richtung zum Distanzelement (10) hin federelastisch beaufschlagt.

2. Befestigungselement nach Anspruch 1, **dadurch gekennzeichnet, dass** die Befestigungsmutter (2) in der Aufnahmeöffnung (16) mittels des Federschenkels (22) klemmend gehalten ist.

3. Befestigungselement nach Anspruch 1 oder 2, **dadurch gekennzeichnet, dass** das erste Seitenteil (17) und der Federschenkel (22) biegesteif verbunden sind.

4. Befestigungselement nach einem der Ansprüche 1 bis 3, **dadurch gekennzeichnet, dass** das erste Seitenteil (17) eine erste Anlagefläche (19) für eine erste Seitenwand (21) der Befestigungsmutter (2) bildet.

5. Befestigungselement nach einem der Ansprüche 1 bis 4, **dadurch gekennzeichnet, dass** das zweite Seitenteil (18) eine zweite Anlagefläche (20) für eine zweite Seitenwand (27) der Befestigungsmutter (2) bildet.

6. Befestigungselement nach einem der Ansprüche 1 bis 5, **dadurch gekennzeichnet, dass** das zweite Seitenteil (18) über die Vorderfläche (25) der Befestigungsmutter (2) übersteht, die dem Distanzelement (10) abgewandt ist.

7. Befestigungselement nach einem der Ansprüche 1 bis 6, **dadurch gekennzeichnet, dass** an dem ersten Seitenteil (17) zwei Federschenkel (22) angeordnet sind, die die Befestigungsmutter (2) in Richtung zum Distanzelement (10) hin federelastisch beaufschlagen.

8. Befestigungselement nach einem der Ansprüche 1 bis 7, **dadurch gekennzeichnet, dass** das erste Seitenteil (17) und/oder das zweite Seitenteil (18) zumindest in Teilbereichen einen kreissegmentförmigen Querschnitt mit einer gekrümmten Umfangsfläche aufweist.

9. Befestigungselement nach einem der Ansprüche 1 bis 8, **dadurch gekennzeichnet, dass** das Befestigungselement (1) zwei Anschlagelemente (12) aufweist, die zur Längsachse (L) spiegelsymmetrisch am Distanzelement (10) angeordnet sind.

10. Befestigungselement nach einem der Ansprüche 1 bis 9, **dadurch gekennzeichnet, dass** am zweiten Seitenteil (18) ein Führungselement (26) zur Führung der Befestigungsmutter (2) angeordnet ist.

## Claims

1. Fixing element (1) having a fixing nut (2) and a mounting sleeve (3) for fixing an article to a mounting rail,
wherein the fixing nut (2) has a length (LM) that is greater than its width (BM) and its height (HM),
wherein the mounting sleeve (3) comprises a collar-like bearing surface (13) for contact with the mounting rail, a nut receiver (15) for receiving the fixing nut (2) and a spacer element (10) having a screw receiver (11) extending along a longitudinal axis (L),
wherein the nut receiver (15) is arranged at the end of the spacer element (10) located opposite the bearing surface (13),
wherein the nut receiver (15) has a receiving opening (16) which is defined by two mutually oppositely located side members (17, 18) between which the fixing nut (2) is held so as to be fixed against rotation relative to the spacer element (10) but axially movable in relation to the longitudinal axis (L), and
wherein the fixing element (1) has a resilient limb (22) which is arranged on a first side member (17) of the nut receiver (15) and which resiliently urges the fixing nut (2) in a direction towards the spacer element (10),
**characterised in that**
on the second side member (18) there is arranged no resilient limb which resiliently urges the fixing nut (2) in a direction towards the spacer element (10).

2. Fixing element according to claim 1, **characterised in that** the fixing nut (2) is held clamped in the receiving opening (16) by means of the resilient limb (22).

3. Fixing element according to claim 1 or 2, **characterised in that** the first side member (17) and the resilient limb (22) are rigidly connected.

4. Fixing element according to any one of claims 1 to 3, **characterised in that** the first side member (17) forms a first bearing surface (19) for a first side wall (21) of the fixing nut (2).

5. Fixing element according to any one of claims 1 to 4, **characterised in that** the second side member (18) forms a second bearing surface (20) for a second side wall (27) of the fixing nut (2).

6. Fixing element according to any one of claims 1 to 5, **characterised in that** the second side member (18) projects beyond the front face (25) of the fixing nut (2) remote from the spacer element (10).

7. Fixing element according to any one of claims 1 to 6, **characterised in that** there are arranged on the first side member (17) two resilient limbs (22) which resiliently urge the fixing nut (2) in a direction towards the spacer element (10).

8. Fixing element according to any one of claims 1 to 7, **characterised in that** the first side member (17) and/or the second side member (18) has, at least in subregions, a circular-segment-shaped cross-section with a curved peripheral surface.

9. Fixing element according to any one of claims 1 to 8, **characterised in that** the fixing element (1) has two stop elements (12) which are arranged on the spacer element (10) mirror-symmetrically with respect to the longitudinal axis (L).

10. Fixing element according to any one of claims 1 to 9, **characterised in that** on the second side member (18) there is arranged a guide element (26) for guiding the fixing nut (2).

## Revendications

1. Elément de fixation (1) comprenant un écrou de fixation (2) et une douille de montage (3) dévolue à la fixation d'un objet à un rail de montage,
ledit écrou de fixation (2) présentant une longueur (LM) supérieure à sa largeur (BM) et à sa hauteur (HM),
ladite douille de montage (3) incluant une surface de contact (13) du type collerette, réalisée pour venir en applique contre le rail de montage, un logement (15) destiné à recevoir l'écrou de fixation (2), et un élément d'espacement (10) muni d'un logement de vis (11) s'étendant le long d'un axe longitudinal (L),
ledit logement (15) de l'écrou étant disposé à l'extrémité dudit élément d'espacement (10) qui pointe à l'opposé de ladite surface de contact (13),
sachant que ledit logement (15) de l'écrou est pourvu d'un orifice de réception (16) délimité par deux parties latérales (17, 18) en vis-à-vis mutuel, entre lesquelles ledit écrou de fixation (2) est retenu, par rapport audit axe longitudinal (L), avec verrouillage rotatif sur ledit élément d'espacement (10), mais avec faculté de mouvement axial, et
sachant que ledit élément de fixation (1) est doté d'une aile élastique (22) qui est située sur une première partie latérale (17) dudit logement (15) de l'écrou, et sollicite élastiquement ledit écrou de fixation (2) en direction dudit élément d'espacement (10),
**caractérisé par le fait**
**que** la seconde partie latérale (18) ne comporte aucune aile élastique sollicitant élastiquement l'écrou de fixation (2) en direction de l'élément d'espacement (10).

2. Elément de fixation selon la revendication 1, **caractérisé par le fait que** l'écrou de fixation (2) est retenu par coincement dans l'orifice de réception (16), au moyen de l'aile élastique (22).

3. Elément de fixation selon la revendication 1 ou 2, **caractérisé par le fait que** la première partie latérale (17) et l'aile élastique (22) sont reliées avec rigidité à la flexion.

4. Elément de fixation selon l'une des revendications 1 à 3, **caractérisé par le fait que** la première partie latérale (17) forme une première surface de contact (19) dédiée à une première paroi latérale (21) de l'écrou de fixation (2).

5. Elément de fixation selon l'une des revendications 1 à 4, **caractérisé par le fait que** la seconde partie latérale (18) forme une seconde surface de contact (20) dédiée à une seconde paroi latérale (27) de l'écrou de fixation (2).

6. Elément de fixation selon l'une des revendications 1 à 5, **caractérisé par le fait que** la seconde partie latérale (18) fait saillie au-delà de la face frontale (25) de l'écrou de fixation (2), tournée à l'opposé de l'élément d'espacement (10).

7. Elément de fixation selon l'une des revendications 1 à 6, **caractérisé par le fait que** deux ailes élastiques (22), disposées sur la première partie latérale (17), sollicitent élastiquement l'écrou de fixation (2) en direction de l'élément d'espacement (10).

8. Elément de fixation selon l'une des revendications 1 à 7, **caractérisé par le fait que** la première partie latérale (17) et/ou la seconde partie latérale (18) présente(nt), au moins dans des régions partielles, une section transversale en forme de segment circulaire comportant une surface périphérique courbe.

9. Elément de fixation selon l'une des revendications 1 à 8, **caractérisé par le fait que** ledit élément de fixation (1) est muni de deux éléments de butée (12) disposés, sur l'élément d'espacement (10), avec symétrie spéculaire par rapport à l'axe longitudinal (L).

10. Elément de fixation selon l'une des revendications 1 à 9, **caractérisé par le fait qu'**un élément de guidage (26), réalisé pour guider l'écrou de fixation (2), est disposé sur la seconde partie latérale (18).
